# EUROPEAN PATENT SPECIFICATION

(11) **EP 4 337 439 B1**
(45) Date of publication and mention of the grant of the patent: **07.01.2026**
(21) Application number: 21726607.1
(22) Date of filing: 11.05.2021
(51) Int. Cl.: B28C 7/16

(54) **INSTALLATION AND METHOD FOR COOLING CONCRETE**
ANLAGE UND VERFAHREN ZUM KÜHLEN VON BETON
INSTALLATION ET PROCÉDÉ DE REFROIDISSEMENT DE BÉTON

(43) Date of publication of application: 20.03.2024
(73) Proprietor: DUE M S.R.L., 37041 Albaredo D'Adige (VR) (IT)
(72) Inventor: BUFFA, Alberto, 21047 Saronno (VA) (IT); DUSI, Marco, 6850 Mendrisio (CH)
(74) Representative: Morabito, Sara
(86) International application number: PCT/EP2021/062470
(87) International publication number: WO 2022/237969

(56) References cited:
- EP-A1- 3 862 157
- WO-A1-2017/121737
- JP-A- H01 297 219
- JP-A- H03 268 905
- SU-A1- 921 967

## Description

### Technical field

The present invention relates to an installation and a method for cooling concrete by advantageously using the latent evaporation heat of the water.

### Technological background

During construction, concrete is cast in the fluid state and progressively changes to the rigid state in accordance with a reaction known as setting the concrete.

During this step, the concrete has to remain to the greatest possible extent in a humid environment in order to ensure that the complete process of hydration of the cement takes place and that, therefore, the concrete has good mechanical and resistance properties.

At the same time, during the setting phase, the concrete has to remain below the maximum temperatures allowed in order to prevent thermal stresses.

This problem is particularly perceived when the casting of cool concrete is carried out in environments with high temperatures and/or low humidity and/or when the casting is intended for massive works such as, for example, dykes and foundations. In such cases, in fact, the increase of the temperature produced by the hydration process of the cement material can generate micro-cracks.

The formation of such micro-cracks may be prevented by limiting the temperature of the cool concrete at the time of casting. In fact, there exist rigid standards regarding the temperature of the cool concrete which may require temperatures, during laying, of 10°C or less.

In order to comply with these requirements, different arrangements have been adopted until now.

There have been proposed and have been used methods for separately cooling the ingredients of the concrete and particularly the construction aggregates before mixing them in order to form the concrete.

It is known, for example, to cool the construction aggregates before the mixing in order to form the concrete with water or with air.

A known system for this purpose uses ice and cold water. In this system, the need to maintain a reserve of cold water and a reserve of ice ready for use causes a substantial given quantity of energy to be expended in order to compensate for the thermal dispersion and to directly cool the concrete itself. Furthermore, the degree of coolness which can be achieved with this system is strongly limited because the ice and the cold water are the only ingredients of the mixture to have a refrigerating capacity and constitute only approximately from 5 to 8% by weight of the entire mixture. Consequently, in the typical case in which the mean temperature of the concrete which is not cooled is approximately 40°C, a system which uses only ice and cold water does not allow the construction aggregates or the concrete to be cooled to temperatures less than approximately 28°C.

Another cooling system according to the prior art uses cold water, ice and cold air which is blown inside refrigerating silos. This technique allows pre-cooling of the coarse aggregates but not the fine ones. In fact, this technique means that the dimensions of the aggregate itself are sufficiently large to constitute a "porous" mass which allows the air to move between the stones themselves, in a manner driven by high-powered fans. However, both the sand and the cement which constitute approximately 45% of the total of the concrete mix cannot be pre-cooled in this manner. Therefore, in the typical case in which the mean temperature of the non-cooled concrete is approximately 40°C, a system which uses cold water, ice and cold air does not allow the construction aggregates or the concrete to be cooled to temperatures less than 22°C. Furthermore, in addition to the problems described in the case of only water and ice being used, there is the additional problem resulting from the fact that the electrical power levels necessary for supplying the fans are high and in practical cases may be in the order of 1 kW per m³/h of nominal capacity of the production installation.

Furthermore, the cooling with water and air is not suitable for being used in the case of construction aggregates with small dimensions. In fact, the finest particles are washed away or blown away varying the properties of the cooled material at the outlet of the cooling process. Finally, a deposit of fine aggregates has such a low porosity that the flow of cold air between the particles is practically inhibited.

In a known system which is more sophisticated, in addition to the use of cold water and ice there is provision for the coarser aggregates (gravel) to be cooled on a conveyor belt with a slow advance with jets of cold water which are sprayed onto the gravel itself. However, the sand is caused to pass through a rotating cylinder, in which a flow of cold air is blown in the opposite direction to the flow of sand. However, this system, although being sophisticated, does not allow the concrete to be cooled to temperatures less than 12°C. In addition, it is evident that this solution involves the presence of additional components, contributing to increasing the costs and the complexity of the installation.

In addition to the disadvantages indicated above, the above-mentioned methods involve considerable consumptions of energy as a result of the need to maintain the construction aggregates at low temperatures after cooling until the concrete is mixed. Therefore, it is necessary to provide an additional cooling power which is necessary to maintain the temperature of the construction aggregates at the desired levels during the entire time which elapses between the cooling process and use. Furthermore, it is expensive to store cooled construction aggregates during a breakdown of one of the installations downstream of the production and distribution line of the concrete. In fact, in the case of a standstill or breakdown of the installations upstream or downstream, the maintenance of the temperature cannot be interrupted because the cooling of an entire silo of hot aggregates may take more than one day.

It is evident how the energy expenditure connected with such methods is very high.

Furthermore, the Applicant has established that the above-mentioned cooling systems impose cooling times which are excessively long and which can last several hours.

Other known systems provide for the use of reduced pressure for cooling the construction aggregates. In such systems, the construction aggregates are wetted and supplied to a pressure reduction chamber, in which the pressure is reduced causing the evaporation of a given quantity of water and the consequent cooling of the construction aggregates.

The construction aggregates which are cooled in this manner then receive the cement in order to form a concrete mixture.

In order to obtain cold concrete, therefore, it is necessary to over-cool the construction aggregates so as to compensate for the supply of heat as a result of the addition of cement which has not been cooled beforehand. However, this over-cooling, in addition to being expensive, is also inefficient because it does not allow a concrete mixture which is sufficiently cold and in any case at the desired temperature to be obtained.

Furthermore, the known technique applied to cooling construction aggregates with different dimensions at reduced pressure is particularly unsatisfactory. In fact, stones with a great diameter have a relationship between the volume and surface-area greater than smaller stones. Consequently, the evaporation of the water which wets the larger stones is consumed without the internal volume thereof having been cooled up to the desired temperature, unlike the smaller stones which tend to cool down rapidly as a result of the high relationship thereof between the surface-area and volume.

The known systems for cooling the construction aggregates at reduced pressure have been tested by the Applicant, encountering different technical and thermodynamic limitations which make it extremely difficult to reach a temperature of the concrete less than 15°C.

In fact, the lack of cooling of the cement imposes over-cooling of the aggregates to levels which are not compatible with the reduced pressure technique used. Therefore, it becomes necessary to supply these cooling installations with pre-cooled aggregates. This pre-cooling of the aggregates provides for the use of cooled and insulated hoppers which involve an additional investment and consumption of electrical energy. Practical experiments indicate that the thermal dispersions in the case of pre-cooling of the construction aggregates are approximately 1 kW for each m³/h of nominal capacity of the production installation.

Furthermore, the cooling processes according to the prior art do not ensure control of the quantity of residual water in the resulting mixture and, therefore, do not ensure the correct water/cement ratio of the concrete.

This ratio characterises the concrete mixture according to a predetermined mixture design and must not be changed because it has to be suitable for ensuring the performance levels required for the concrete on the basis of the needs of the designer and the characteristics of the raw materials to be used.

Furthermore, the water/cement ratio is important for ensuring both the correct fluidity of the mixture and, particularly, the final resistance of the concrete.

In the cooling systems according to the prior art, the problem of uncertainty regarding the proportion of water or the water/cement ratio is worsened in that such systems operate with increased quantities of water.

In addition, the systems for cooling under reduced pressure by evaporation according to the prior art do not allow compliance with the mixing times and the precision for metering the products provided for by the standards and in particular do not allow prevention of any risk of so-called segregation of concrete after the formation thereof. Furthermore, the systems for cooling under reduced pressure by evaporation according to the prior art are unsatisfactory in terms of both energy and time necessary for the cooling process.

Furthermore, the cooling of the construction aggregates which can be obtained with the known systems is often insufficient to reach the desired temperature of the casting.

It should be noted that, in the present context, the term "concrete" means a conglomerate for construction, preferably in the fluid state, which is obtained by mixing, in suitable proportions, construction aggregates (for example, sand, gravel, crushed stone) with water and with a binder (for example, cement) which is activated in the presence of water. JP H03268905 A discloses a method for cooling concrete to a predetermined temperature prior to solidification thereof, wherein a part of the water of the concrete is evaporated by performing vacuum drawing. JP H03 268905 A also discloses an installation for cooling concrete according to the preamble of claim 1.

EP 3862157 A1, which is a European patent application falling within the terms of Art. 54(3) EPC, discloses a method and a corresponding plant for cooling a mixture of concrete, the method comprising: loading in a hermetically sealed tank a given quantity of ingredients intended to form the concrete, the ingredients comprising a predetermined quantity of water; regulating the pressure in the tank so as to obtain a transitory degree of vacuum in the tank; regulating the pressure inside a hermetically sealed condensation chamber so as to obtain a basic degree of vacuum in the condensation chamber that is greater than the transitory degree of vacuum; operatively connecting the tank and the condensation chamber so as to substantially equalise the internal pressure in the tank and in the condensation chamber to a resulting degree of vacuum and to cause at least partial evaporation of the water from the tank towards the condensation chamber so as to lower the temperature of the ingredients in the tank.

### Statement of invention

The technical problem addressed by the present invention is to provide an installation and a method for cooling concrete which are structurally and functionally configured to at least partially overcome one or more of the disadvantages set out with reference to the prior art set out above.

In particular, a first objective of the invention is to provide an installation and a method for cooling pumpable concrete.

It should be noted that, in this context, the term "pumpable concrete" refers to a concrete which, as a result of granulometry and cohesion, is suitable for pumping. This type of concrete contains aggregates with a diameter which is preferably not greater than 30 or 32 mm and, even more preferably, not greater than 25 mm.

A second objective of the invention is to provide an installation and a method for cooling concrete continuously. Another objective of the invention is to provide an installation and a method for cooling concrete within short times.

Another objective of the invention is to provide an installation for cooling concrete which is readily transportable.

Another objective of the invention is to provide an installation and a method for cooling concrete at the casting location (cast-in-place concrete) or in the immediate vicinity.

Furthermore, an objective of the present invention is to provide an installation and a method for cooling concrete with low costs and with a simple construction.

This problem is solved and these objects are achieved by the invention by means of an installation and a method for cooling concrete which are carried out according to one or more of the appended claims.

In one aspect of the present invention, there is provided an installation for cooling concrete (preferably of the pumpable type) which contains a predetermined quantity of water.

The installation comprises an airtight casing, in which there are defined a chamber which is intended to contain a desired quantity of concrete, an inlet opening for the concrete into the chamber and a pipe which communicates with the chamber and which extends from the chamber to an outlet opening for the concrete which is defined in the casing at one end of the pipe at the side opposite the chamber. The pipe is configured to convey the concrete from the chamber towards the outlet opening.

It should be noted that, in the present context, the term "airtight" preferably means substantially airtight and it refers to the condition of the casing in which the inlet and outlet openings are sealed. Further preferably, the airtight casing is meant to be structurally suitable for withstanding reduced pressure inside the airtight casing.

The installation further comprises a vacuum pump which is connected to the chamber in order to adjust a degree of reduced pressure therein so as to bring about at least a partial evaporation of the water from the concrete and a condenser which is arranged inside the chamber in order to condense the evaporated water.

In an operative configuration, the pipe preferably extends downwards from the chamber and, even more preferably, it extends substantially vertically. Still with reference to the operative configuration, the pipe preferably fills a vertical difference in level of at least 3 metres and, even more preferably, between 3 and 6 metres.

In a greatly preferred embodiment, in the operative configuration the pipe fills a vertical difference in level of at least 4 metres and advantageously between 4 and 5 metres. This configuration allows that, during operation, there is formed during transit through the pipe a column of (fluid) concrete which has such a height as to apply a pressure of at least one atmosphere, thereby ensuring the possibility of adjusting a negative pressure in the chamber.

The condenser is preferably arranged inside the chamber at the side opposite the pipe and it is advantageously configured in such a manner that the condensed water flows into the concrete inside the chamber and/or pipe, preferably as a result of gravitational force, for example, by means of dripping. This configuration advantageously allows the restoration or at least the substantial restoration of the quantity of water contained in the concrete at the start of the cooling process so as to maintain the water/cement ratio established by the concrete mixture design in a substantially unchanged state.

In order to facilitate the flow of the condensate and more generally the concrete from the chamber towards the pipe, the chamber may be tapered towards the pipe.

According to another advantageous aspect, the pipe is configured to seal the chamber in an airtight manner from the outlet opening by means of the concrete which, in transit through the pipe, prevents the passage of air from the outlet opening towards the chamber through the pipe.

It should be noted that, in this context, "sealing" preferably means closing tightly so as to render airtight or substantially airtight.

This configuration also allows the reduced pressure to be maintained in the chamber when the outlet opening is open in order to discharge concrete, thereby ensuring the possibility of producing a continuous flow of cooled concrete.

It may be understood that, preferably, the pipe comprises an adjustment device for adjusting the flow of the concrete through the outlet opening. The adjustment device may comprise or may consist of, for example, a valve or a pump or another means suitable for adjusting the flow of concrete through the outlet opening.

In a preferred embodiment, the installation comprises a concrete supply pipe which is connected to the inlet opening.

In an operative configuration, the supply pipe preferably extends downwards from the inlet opening and, even more preferably, it fills a vertical difference in level which is substantially identical to that of the other pipe.

Advantageously, the supply pipe is configured to convey the concrete from the exterior towards the inlet opening and at the same time to seal in an airtight manner the chamber against external pressure by means of the concrete which, in transit through the supply pipe, prevents the passage of air from the exterior towards the inlet opening through the supply pipe.

It should be noted that, in this context, "external pressure" preferably means the atmospheric pressure outside of the airtight casing.

In an aspect, the present invention relates to a method for cooling concrete (preferably of the pumpable type) which contains a predetermined quantity of water by means of the above-mentioned installation. The method comprises:
- providing in the chamber through the inlet opening the concrete at an initial temperature,
- conveying the concrete from the chamber to the pipe,
- adjusting the pressure in the chamber so as to reach such a degree of reduced pressure as to bring about at least a partial evaporation of the water from the concrete with a resultant cooling of the concrete to a final temperature less than the initial temperature,
- condensing the water evaporated from the concrete in the chamber,
- causing the condensed water to flow into the concrete,
- removing the concrete at the final temperature through the outlet opening from the pipe.

It must be observed that, in a preferred embodiment, the pressure downstream of the outlet opening (therefore, outside the airtight casing) is equal to atmospheric pressure.

Preferably, the method provides for airtight sealing of the chamber from the outlet opening by means of the concrete which, in transit through the pipe, prevents the passage of air from the outlet opening towards the chamber through the pipe. This provision allows the reduced pressure to be maintained in the chamber even when the discharge opening is open towards the exterior in order to discharge the concrete from the installation. In this manner, the concrete can be removed from the outlet opening continuously (or, where applicable, at preferably regular time intervals) without interrupting the upstream cooling process.

Advantageously, the method provides for conveying the concrete from the exterior towards the inlet opening through the supply pipe, where applicable by means of a pump which is suitable for pumping the concrete. In this case, there is also preferably provision for airtight sealing of the inlet opening against external pressure by means of the concrete which, in transit through the supply pipe, prevents the passage of air from the exterior towards the inlet opening through the supply pipe.

According to another advantageous aspect, in order to adjust a pressure less than atmospheric pressure inside the chamber, the concrete in transit through the above-mentioned pipes forms respective (fluid) columns with such a height as to apply a pressure of at least one atmosphere.

### Brief description of the drawings

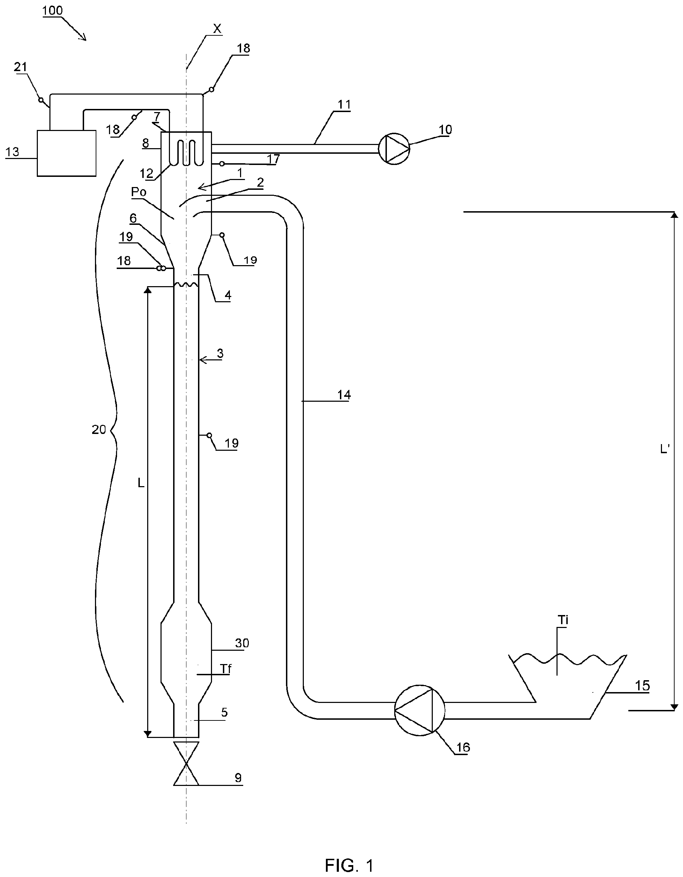

The features and advantages of the invention will be better appreciated from the detailed description of preferred embodiments which are illustrated by way of non-limiting example with reference to the sole figure of the appended drawings, namely Figure 1, which is a schematic illustration of the installation for cooling concrete according to the invention.

### Preferred embodiment of the invention

In Figure 1, reference number 100 indicates an installation for cooling concrete.

The installation 100 comprises an airtight casing 20 suitable for withstanding reduced pressure, in which there are defined: a chamber 1 which is intended to contain a desired quantity of concrete; an inlet opening 2 for the concrete in the chamber 1; a pipe 3 which communicates with the chamber 1 through a mouth 4 of the pipe 3 which is connected to the chamber 1; and an outlet opening 5 for the concrete from the pipe 3 which is defined at an end of the pipe 3 at the opposite side to the chamber 1.

The concrete is intended to flow from the inlet opening 2 to the outlet opening 5 by passing via the chamber 1 and then through the pipe 3.

Preferably, the pipe 3 extends longitudinally along an axis X and, even more preferably, the chamber 1 extends congruently with the pipe 3 along the axis.

In some embodiments, the inlet opening 2 is radially directed with respect to the axis X, while the outlet opening 5 can be directed in accordance with the axis X. It will be understood that, in some embodiments, the outlet opening 5 can also be directed radially with respect to the axis X.

The chamber 1 is delimited by: a connection portion 6 with respect to the pipe 3; an upper wall 7 at the opposite side to the connection portion 6; and at least one side wall 8 which extends from the connection portion 6 to the upper wall 7.

Preferably, the connection portion 6 is tapered towards the mouth 4 of the pipe 3. In a preferred embodiment, the connection portion 6 defines a truncated cone, the tip of which is directed towards the pipe 3.

In some embodiments, the chamber 1 is axially symmetrical with respect to the axis X. The upper wall 7 may be substantially planar while the side wall 8 is preferably cylindrical. It will be understood that the configuration of the chamber 1 may be adapted to the needs for production capacity and the limitations in terms of spatial requirement given by the different applications of the system.

In a preferred embodiment, the inlet opening 2 is defined through the connection portion 6 or the side wall 8 or at the interface between the two, preferably in an intermediate position between the upper wall 7 and the mouth 4 of the pipe 3.

Advantageously, the pipe 3 has a length L which is suitable for receiving during transit through the pipe 3 a column of concrete with such a height as to apply a pressure of (at least) one atmosphere.

It should be noted that the density of concrete is generally between 2200 and 2600 kg/m³. In a greatly preferred embodiment, therefore, the length L of the pipe 3 is at least 3 metres and, preferably, it is between 3 and 6 metres. Even more preferably, the length L is at least 4 metres and, advantageously, it is between 4 and 5 metres.

In a preferred embodiment, the pipe 3 has a hollow circular cross-section. Advantageously, the diameter thereof is selected to ensure a desired flow rate and a desired transit speed of the concrete through the pipe 3. To this end, the diameter of the pipe 3 can be constant or can be variable over the longitudinal development of the pipe itself.

According to another advantageous aspect, there is provision for an adjustment device 9 for adjusting the flow of the concrete through the outlet opening 5 of the pipe. Preferably, the adjustment device 9 is configured to keep closed (hermetically) the outlet opening 5 and to open it temporarily when it is desirable to remove a desired quantity of cooled concrete (for example, a quantity in the range of 300 to 400 litres). In some embodiments, the adjustment device 9 is configured to open the outlet opening 5 at regular time intervals with a desired frequency. It will be understood that the drawing of the cooled concrete may also occur continuously, by suitably adjusting the adjustment device 9 with respect to the supply flow rate.

It must be observed that, the quantity of concrete to be drawn being fixed, the frequency at which the adjustment device 9 opens the outlet opening 5 depends on the flow rate of concrete through the pipe 3. Therefore, the pipe 3 is advantageously sized in accordance with a desired frequency, at which the adjustment device 9 opens the outlet opening 5. To this end, it is envisaged that an end portion 30 of the pipe 3 immediately upstream of the outlet opening 5 and the adjustment device 9 may have a greater cross-section (for example, in terms of diameter or surface-area) with respect to the rest of the pipe 3. This arrangement allows the formation in the end portion 30 of a discharge expansion with a sufficient volume so that, every time the outlet opening 5 controlled by the adjustment device 9 is opened, the desired quantity of concrete is discharged, at the same time maintaining inside the pipe 3 a column of concrete with the desired height.

The installation 100 further comprises a vacuum pump 10 which is connected to the chamber 1 by means of an intake pipe 11 in order to generate and maintain the reduced pressure inside the chamber 1.

It should be noted that, in this context, the term "reduced pressure" refers to a pressure condition less than atmospheric pressure.

In a preferred embodiment, the vacuum pump 10 has an operating range between 10 and 100 millibar or, in some cases, between 30 and 70 millibar.

Preferably, the intake pipe 11 is connected to the chamber 1 at the side opposite the mouth 4 of the pipe 3. For example, the intake pipe 11 can be connected in the region of the upper wall 7 or the side wall 8.

The installation 100 further comprises a condenser 12 which is arranged inside the chamber 1, preferably at the side opposite the mouth 4 of the pipe 3. In some embodiments, the condenser 12 is mounted on the upper wall 7.

It should be noted that, in this context, the term "condenser" preferably refers to a heat exchanger.

Advantageously, the condenser 12 is of the tube type. This arrangement allows any introductions of air into the junction of the condenser in the chamber 1 to be minimized. According to another advantageous aspect, there is provision for a chiller 13 which is connected to the condenser 12 to provide a refrigerating fluid in transit through the condenser 12.

In a preferred embodiment, the installation 100 comprises a supply pipe 14 for the concrete to the inlet opening 2.

In some embodiments, the inlet opening 2 is defined at an end of the supply pipe 14 which is connected to the chamber 1 in the region, for example, of the connection portion 6 or the side wall 8 or at the interface between the two, preferably in an intermediate position between the upper wall 7 and the mouth 4 of the pipe 3.

In some embodiments, the end of the supply pipe 14 which defines the inlet opening 2 projects inside the chamber 1, preferably until it reaches the axis X of symmetry of the chamber itself. Even more preferably, the end of the supply pipe 14 which projects inside the chamber 1 is directed towards the connection portion 6 or in any case at the side opposite the condenser 12. This configuration allows the flow of concrete to be directed from the inlet opening 2 towards the pipe 3.

Advantageously, the supply pipe 14 has a hollow circular cross-section, which is preferably constant over the longitudinal development of the pipe itself.

The supply pipe 14 may draw from a tank 15 which contains concrete, preferably pumpable concrete, which may be at ambient temperature and/or pressure. In a preferred embodiment, the supply pipe 14, at least over a portion of the longitudinal development thereof, is substantially parallel with the pipe 3. Preferably, the portion of the supply pipe 14 has a length L' of at least 3 metres and, even more preferably, between 3 and 6 metres. In a greatly preferred embodiment, the length L' is at least 4 metres and, advantageously, it is between 4 and 5 metres. It will be noted that, in a greatly preferred embodiment, the length L' is substantially equal to the length L of the pipe 3. Advantageously, there is provided a pump 16 which is suitable for pumping the concrete and which is connected to the supply pipe 14 in order to supply the concrete under pressure from the tank 15 to the inlet opening 2. To this end, the pump 16 has an operating range which ensures, with a suitable margin, the regular supply of the system.

In order to control the parameters of the cooling process of the concrete, the installation 100 according to the invention includes one or more sensors selected from pressure sensors 17, temperature sensors 18, level sensors 19 and flow sensors 21, which may be connected to the chamber 1 and/or the pipe 3 and/or the condenser 12.

In a preferred embodiment, there is provided at least one pressure sensor 17 which is connected to the chamber 1, preferably at the side opposite the mouth 4 of the pipe 3.

In a preferred embodiment, there is provided at least one temperature sensor 18 which is connected to the chamber 1 (preferably in the region of the connection portion 6) and/or the pipe 3 (preferably in the region of the mouth 4) or at the interface between the chamber 1 and the pipe 3.

Preferably, there is provided at least one temperature sensor 18 which is connected to the condenser 12. Even more preferably, there are provided two temperature sensors 18 which are connected, one to the inlet and the other to the outlet of the condenser 12.

In some embodiments, there is provision for a plurality of level sensors 19 which are distributed over the longitudinal extent of the chamber 1 and/or the pipe 3 and which are configured to measure the level of the concrete in the chamber 1 and/or in the pipe 3, respectively.

In a preferred embodiment, there are provided at least one level sensor 19 which is connected to the chamber 1 (preferably, at the side directed towards the pipe 3) and another level sensor 19 which is connected to the pipe 3 (preferably, in an intermediate position between the mouth 4 and the outlet opening 5).

In a preferred embodiment, there are provided two level sensors 19 which are connected to the chamber 1, preferably in the region of the connection portion 6. Even more preferably, one of the two level sensors 19 is connected to the connection portion 6 at the side opposite the pipe 3 and the other is connected to the connection portion 6 at the side directed towards the pipe 3 (for example, in the region of the mouth 4).

The level sensors 19 may be of the continuous type or may be level sensors for defined thresholds. Advantageously, the level sensors for defined thresholds can operate with different measuring methods, such as, for example, capacitive resistance, microwaves, radar, ultrasound or weight.

In some embodiments, there is provided at least one flow sensor 21 which is connected to the condenser 12 and which is configured to measure the flow of refrigerating fluid per unit of time.

Advantageously, there is provided a control unit for the vacuum pump 10 which is operatively connected to at least one pressure sensor 17 of the chamber 1 in order to adjust the degree of reduced pressure in the chamber 1 in accordance with the pressure measured by the sensor 17.

According to another advantageous aspect, there is provided a control unit for the chiller 13 which is operatively connected to at least one temperature sensor 18 in order to adjust the quantity of heat removed from the condenser 12 in accordance with the temperature of the concrete measured by the sensor 18. It may be understood that the quantity of heat removed by the condenser 12 will depend on the quantity of refrigerating fluid (advantageously measured by the flow sensor 21) and on the temperature difference at the inlet and outlet of the condenser (advantageously measured by the temperature sensor 18).

According to another advantageous aspect, there is provided a control system for the pump 16 and the adjustment device 9 which is connected to one or more level sensors 19 in order to adjust the flow of concrete in transit through the installation, in accordance with the levels of concrete measured by the sensors 19. This configuration allows adjustment of the flows and levels of concrete suitable for ensuring the continuity of the process.

In an operative configuration, the installation 100 is arranged in such a manner that the pipe 3 extends downwards from the chamber 1. Preferably, in an operative configuration, the supply pipe 14 also extends downwards from the chamber 1. Further preferably, in the operative configuration, the supply pipe 14 extends downward from the inlet opening 2.

In this configuration, preferably, the chamber 1 is arranged in a raised position (with respect to the ground) by means of a support structure and, preferably, the axis X of the pipe 3 (and of the chamber 1) is orientated substantially vertically.

It will be noted that, in the operative configuration, the chamber 1 forms with the pipe 3 a structure which is similar to the structure of a surge tank of the type used in aqueducts.

It will be understood that, in some cases, the pipe 3 may be orientated in an oblique direction with respect to the ground, on condition that, from the mouth 4 to the outlet opening 5, the longitudinal development of the pipe 3 fills a vertical difference in level. Preferably, this difference in level is at least 3 metres and, even more preferably, it is between 3 and 6 metres. In a greatly preferred embodiment, this difference in level is at least 4 metres and, advantageously, it is between 4 and 5 metres.

In the operative configuration, the supply pipe 14 is also preferably orientated substantially vertically, at least over a portion of the longitudinal development thereof. It will be understood that the supply pipe 14 may take up an oblique orientation with respect to the ground and/or it may form curves along the longitudinal development thereof, on condition that, from the drawing location in the tank 15 to the inlet opening 2, the supply pipe 14 fills a vertical difference in level, preferably a vertical difference in level which is substantially equal to the difference in level which is filled by the pipe 3. Preferably, the vertical difference in level filled by the supply pipe 14 is at least 3 metres and, even more preferably, it is between 3 and 6 metres. In a greatly preferred embodiment, the vertical difference in level filled by the supply pipe 14 is at least 4 metres and, advantageously, it is between 4 and 5 metres. This configuration means that, during operation, the column of concrete in transit through the supply pipe 14 has a height which is substantially equal to the height of the column of concrete in transit through the pipe 3.

The operation of the installation 100 is described below.

The concrete, preferably of the pumpable type and containing a predetermined quantity of water, is introduced into the installation 100 from the tank 15 at an initial temperature Ti (for example, ambient temperature) through the supply pipe 14 and the inlet opening 2, as a result of the effect of the negative pressure applied by the vacuum pump 10 and/or as a result of the effects of the positive pressure applied by the delivery pump 16 for the concrete.

Inside the chamber 1, the concrete is guided so as to descend, preferably as a result of gravitational force, from the connection portion 6 towards the mouth 4 of the pipe 3.

The concrete continues to descend from the mouth 4, preferably as a result of gravitational force, through the pipe 3, in which it accumulates forming a column of concrete in transit through the pipe 3. In a preferred embodiment, such a column fills the pipe 3 over the entire length L thereof. The flow of concrete through the pipe 3 is adjusted by the adjustment device 9 which intercepts the discharge of the concrete from the outlet opening 5.

Advantageously, the adjustment device 9 and the delivery pump 16 are synchronized with each other or in any case cooperate so as to maintain in the pipe 3 a column of concrete with the desired height.

When the adjustment device 9 opens the outlet opening 5, the concrete is free to be discharged from the pipe 3 through the outlet opening 5, but the chamber 1 still remains sealed against external pressure (atmospheric pressure) because the column of concrete in transit through the pipe 3 has such a height and a cohesion as to generate a cap-like barrier or blockage which prevents the introduction of air from the outlet opening 5 to the chamber 1 during the time period for which the outlet opening 5 remains open.

It should be noted that the chamber 1 also remains sealed relative to the external pressure in the region of the supply pipe 14. In fact, the concrete in transit through the supply pipe 14 prevents the introduction of air from outside towards the chamber 1, in a manner similar to what occurs through the pipe 3.

To this end, it may be observed that, in order to obtain airtightness through the pipes 3, 14, it is particularly advantageous to use concrete of the pumpable type because, with the cohesion thereof, it prevents the formation of porosity and ensures the formation of a lubricating layer on the sliding surface of the pipes 3, 14 capable of preventing the introduction of air.

This configuration enables the chamber 1 to be sealed in an airtight manner and therefore enables the vacuum pump 10 through the intake pipe 11 to be able to adjust the pressure Po inside the chamber 1 itself.

It must be observed that, during operation, there travel in the pipe 3 and in the supply pipe 14 respective columns of concrete having substantially the same height so as to apply a pressure of (at least) one atmosphere.

In this manner, the airtightness of the chamber 1 is ensured and the vacuum pump 10 can adjust inside the chamber 1 a pressure Po less than atmospheric pressure.

In this context, the vacuum pump 10 adjusts inside the chamber 1 such a degree of reduced pressure as to bring about at least a partial evaporation of the water from the concrete. The water evaporated in this step may be, for example, between 10 and 15% of the quantity of water initially contained in the concrete being introduced into the installation 100.

It will be appreciated that the evaporation of the water involves the subtraction of a quantity of energy corresponding to the latent heat of evaporation of the water and, therefore, involves cooling the concrete from the initial temperature Ti to a final temperature Tf (for example, 10°C) less than the initial temperature Ti.

It is possible to achieve the final temperature Tf desired by suitably adjusting the pressure Po, and therefore the degree of reduced pressure, inside the chamber 1. For example, the degree of reduced pressure may be between 10 and 100 millibar or, in some cases, between 30 and 70 millibar.

The water evaporated from the concrete remains inside the chamber 1, where it condenses in contact with the heat exchange surface of the condenser 12. In fact, as a result of the passage of a refrigerating fluid, the condenser 12 removes latent heat from the water evaporated from the concrete. Therefore, the water evaporated from the concrete condenses, that is to say, it changes from the gaseous state to the liquid state. According to another advantageous aspect, the water condensed in this manner returns to the concrete from which it had evaporated, thereby ensuring the compliance with the pre-determined water/cement ratio during the entire process.

Preferably, the condensed water returns to the concrete as a result of gravitational force, for example, by means of dripping, descending from the surface of the condenser 12 towards the concrete below inside the chamber 1 and/or pipe 3.

It must be observed that, advantageously, the condensed water returning to the concrete does not give rise to phenomena of segregation of the concrete because the introduction of the concrete into the chamber 1 through the inlet opening 2 and furthermore the evaporation process inside the chamber 1 are turbulent phenomena which ensure continuous and energetic remixing of the concrete.

The evaporation process of the water from the concrete, and therefore also the remixing which results therefrom, advantageously involves both the concrete in transit in the chamber 1 and the concrete present in the pipe 3, at least at the mouth 4 thereof.

Furthermore, such remixing ensures homogeneous cooling of the concrete, not only at the surface but also at great depth.

The time taken by the concrete to pass through the pipe 3 may be less than one minute (for example, from 30 to 40 seconds) and depends on the flow rate of the pipe itself (for example, from 60 to 100 m³/h) .

As the concrete to be cooled is introduced into the chamber 1, the concrete cooled can be removed from the outlet opening 5, ensuring the continuity of the cooling process which, therefore, does not have any downtimes and may supply concrete without interruption.

Advantageously, the concrete being discharged from the outlet opening 5 has substantially the same quantity of water as the concrete being introduced and a final temperature Tf suitable for casting. Therefore, the concrete being discharged from the outlet opening 5 can be directly cast or poured into a cement mixer for transport to the place of use.

It may be noted that the final temperature Tf depends on factors such as the thermal inertia and the quantity of concrete introduced into the chamber 1, the initial temperature Ti of the concrete and the quantity of water evaporated/condensed during the process. By acting on the above-mentioned variables, it is possible to obtain concrete having the final temperature Tf desired.

The invention thereby solves the problem set out while achieving a number of advantages, including:
- an energy-efficient process which allows concrete to be cooled continuously without downtimes;
- an energy-efficient process because it allows the use of chillers within the bounds of best performance;
- an energy-efficient process because it acts on all the components of the concrete;
- the cooling of concrete to temperatures of 10°C or less;
- the recovery of the condensate so as substantially not to change the quantity of water provided in the concrete according to the concrete mixture design;
- a cooling process which is ready for production and which allows the concrete to be cooled within short times;
- a cooling process which allows the concrete to be cooled in real time without being influenced by the state of the installations upstream or downstream and without requiring energy for the pre-cooling of the construction aggregates and/or maintaining the temperature thereof;
- an installation for cooling the concrete with minimum thermal inertia, which allows the cooling process to be started within short time periods, without any need for pre-cooling of the installation or storing and maintaining chilled components;
- a simple and compact installation;
- a mobile installation which can be readily installed at the site where the concrete is being cast.

## Claims

1. An installation (100) for cooling concrete which contains a predetermined quantity of water, comprising
• an airtight casing (20), in which there are defined a chamber (1) which is intended to contain a desired quantity of concrete, an inlet opening (2) for the concrete into the chamber (1) and a pipe (3) which communicates with the chamber (1) and which extends from the chamber (1) to an outlet opening (5) for the concrete which is defined in the casing (20) at one end of the pipe (3) at the side opposite the chamber (1), the pipe (3) being configured to convey the concrete from the chamber (1) towards the outlet opening (5),
• a vacuum pump (10) which is connected to the chamber (1) in order to adjust a degree of reduced pressure therein so as to bring about at least a partial evaporation of the water from the concrete,
• a condenser (12) configured to condense the evaporated water, **characterized in that** the condenser (12) is arranged inside the chamber (1), the condenser (12) being configured in such a manner that the condensed water flows into the concrete inside the chamber (1) and/or pipe (3),
• the installation (100) comprising one or more sensors selected from pressure sensors (17), temperature sensors (18), level sensors (19) and flow sensors (21).

2. An installation (100) according to claim 1, wherein the pipe (3) is configured to seal the chamber (1) in an airtight manner from the outlet opening (5) by means of the concrete which, in transit through the pipe (3), prevents the passage of air from the outlet opening (5) towards the chamber (1) through the pipe (3).

3. An installation (100) according to claim 1 or 2, wherein the pipe (3), in an operative configuration, extends downwards from the chamber (1), and/or wherein the pipe (3), in an operative configuration, extends substantially vertically.

4. An installation (100) according to any one of the preceding claims, wherein the pipe (3), in an operative configuration, fills a vertical difference in level of at least 3 metres, preferably fills a vertical difference in level between 3 and 6 metres, even more preferably fills a vertical difference in level between 4 and 5 metres.

5. An installation (100) according to any one of the preceding claims, wherein the pipe (3) comprises an adjustment device (9) for adjusting the flow of the concrete through the outlet opening (5).

6. An installation (100) according to any one of the preceding claims, wherein the chamber (1) is tapered towards the pipe (3).

7. An installation (100) according to any one of the preceding claims, wherein the condenser (12) is arranged inside the chamber (1) at a side opposite the pipe (3).

8. An installation (100) according to any one of the preceding claims, comprising a concrete supply pipe (14) which is connected to the inlet opening (2).

9. An installation (100) according to claim 8, wherein the supply pipe (14), in an operative configuration, extends downwards from the inlet opening (2), and/or wherein the pipe (3) and supply pipe (14), in an operative configuration, fill a vertical difference in level which is substantially identical.

10. An installation (100) according to claim 8 or 9, wherein the supply pipe (14) is configured to convey the concrete from the exterior towards the inlet opening (2) and at the same time to seal in an airtight manner the chamber (1) against external pressure by means of the concrete which, in transit through the supply pipe (14), prevents the passage of air from the exterior towards the inlet opening (2) through the supply pipe (14).

11. An installation (100) according to any one of the preceding claims, wherein the one or more sensors is/are connected to the chamber (1) and/or the pipe (3) and/or the condenser (12).

12. A method for cooling concrete which contains a predetermined quantity of water by means of an installation (100) for cooling concrete which contains a predetermined quantity of water, the installation (100) comprising
• an airtight casing (20), in which there are defined a chamber (1) which is intended to contain a desired quantity of concrete, an inlet opening (2) for the concrete into the chamber (1) and a pipe (3) which communicates with the chamber (1) and which extends from the chamber (1) to an outlet opening (5) for the concrete which is defined in the casing (20) at one end of the pipe (3) at the side opposite the chamber (1), the pipe (3) being configured to convey the concrete from the chamber (1) towards the outlet opening (5),
• a vacuum pump (10) which is connected to the chamber (1) in order to adjust a degree of reduced pressure therein so as to bring about at least a partial evaporation of the water from the concrete,
• a condenser (12) which is arranged inside the chamber (1) in order to condense the evaporated water, the condenser (12) being configured in such a manner that the condensed water flows into the concrete inside the chamber (1) and/or pipe (3),
the method comprising:
• providing in the chamber (1) through the inlet opening (2) the concrete at an initial temperature (Ti),
• conveying the concrete from the chamber (1) to the pipe (3),
• adjusting the pressure (Po) in the chamber (1) so as to reach such a degree of reduced pressure as to bring about at least a partial evaporation of the water from the concrete with a resultant cooling of the concrete to a final temperature (Tf) less than the initial temperature (Ti),
• condensing the water evaporated from the concrete in the chamber (1),
• causing the condensed water to flow into the concrete,
• removing the concrete at the final temperature (Tf) through the outlet opening (5) from the pipe (3).

13. A method according to claim 12, comprising airtight sealing of the chamber (1) from the outlet opening (5) by means of the concrete which, in transit through the pipe (3), prevents the passage of air from the outlet opening (5) towards the chamber (1) through the pipe (3).

14. A method according to claim 12 or 13, wherein the installation (100) comprises a concrete supply pipe (14) which is connected to the inlet opening (2), the method comprising conveying the concrete from the exterior towards the inlet opening (2) through the supply pipe (14).

15. A method according to claim 14, comprising airtight sealing of the inlet opening (2) against external pressure by means of the concrete which, in transit through the supply pipe (14), prevents the passage of air from the exterior towards the inlet opening (2) through the supply pipe (14).

16. A method according to claim 14 or 15, wherein the concrete in transit through the pipe (3) and/or the supply pipe (14) forms a respective column with such a height as to apply a pressure of at least one atmosphere.

## Patentansprüche

1. Anlage (100) zum Kühlen von Beton, der eine vorbestimmte Wassermenge enthält, umfassend:
• ein luftdichtes Gehäuse (20), in dem eine Kammer (1), die dazu bestimmt ist, eine gewünschte Menge Beton aufzunehmen, eine Einlassöffnung (2) für den Beton in die Kammer (1) und ein Rohr (3) ausgebildet sind, das mit der Kammer (1) in Verbindung steht und sich von der Kammer (1) zu einer Auslassöffnung (5) für den Beton erstreckt, die im Gehäuse (20) an einem Ende des Rohrs (3) auf der der Kammer (1) gegenüberliegenden Seite ausgebildet ist, wobei das Rohr (3) eingerichtet ist, um den Beton aus der Kammer (1) zur Auslassöffnung (5) zu fördern,
• eine Vakuumpumpe (10), die mit der Kammer (1) verbunden ist, um einen Unterdruckgrad einzustellen, um zumindest eine teilweise Verdampfung des Wassers aus dem Beton herbeizuführen,
• einen Kondensator (12), der eingerichtet ist, um das verdampfte Wasser zu kondensieren, **dadurch gekennzeichnet, dass** der Kondensator (12) innerhalb der Kammer (1) angeordnet ist, wobei der Kondensator (12) derart eingerichtet ist, dass das kondensierte Wasser in den Beton innerhalb der Kammer (1) und/oder des Rohrs (3) fließt,
• wobei die Anlage (100) einen oder mehrere Sensoren aufweist, die aus Drucksensoren (17), Temperatursensoren (18), Füllstandssensoren (19) und Durchflusssensoren (21) ausgewählt sind.

2. Anlage (100) nach Anspruch 1, wobei das Rohr (3) eingerichtet ist, um die Kammer (1) luftdicht von der Auslassöffnung (5) mittels des Betons abzudichten, der beim Durchgang durch das Rohr (3) den Durchtritt von Luft von der Auslassöffnung (5) zur Kammer (1) durch das Rohr (3) verhindert.

3. Anlage (100) nach Anspruch 1 oder 2, wobei sich das Rohr (3) in einer Betriebsanordnung von der Kammer (1) nach unten erstreckt und/oder wobei sich das Rohr (3) in einer Betriebsanordnung im Wesentlichen vertikal erstreckt.

4. Anlage (100) nach einem der vorhergehenden Ansprüche, wobei das Rohr (3) in einer Betriebsanordnung einen vertikalen Höhenunterschied von mindestens 3 Metern ausgleicht, vorzugsweise einen vertikalen Höhenunterschied zwischen 3 und 6 Metern ausgleicht, noch bevorzugter einen vertikalen Höhenunterschied zwischen 4 und 5 Metern ausgleicht.

5. Anlage (100) nach einem der vorhergehenden Ansprüche, wobei das Rohr (3) eine Einstellvorrichtung (9) zum Einstellen des Betonflusses durch die Auslassöffnung (5) aufweist.

6. Anlage (100) nach einem der vorhergehenden Ansprüche, wobei die Kammer (1) in Richtung des Rohres (3) konisch ist.

7. Anlage (100) nach einem der vorhergehenden Ansprüche, wobei der Kondensator (12) innerhalb der Kammer (1) auf einer dem Rohr (3) gegenüberliegenden Seite angeordnet ist.

8. Anlage (100) nach einem der vorhergehenden Ansprüche mit einem Betonzufuhrrohr (14), das mit der Einlassöffnung (2) verbunden ist.

9. Anlage (100) nach Anspruch 8, wobei sich das Zufuhrrohr (14) in einer Betriebsanordnung von der Einlassöffnung (2) nach unten erstreckt und/oder wobei das Rohr (3) und das Zufuhrrohr (14) in einer Betriebsanordnung einen im Wesentlichen identischen vertikalen Höhenunterschied ausgleichen.

10. Anlage (100) nach Anspruch 8 oder 9, wobei das Zufuhrrohr (14) eingerichtet ist, um den Beton von außen zur Einlassöffnung (2) zu fördern und gleichzeitig die Kammer (1) mittels des Betons luftdicht gegen äußeren Druck abzudichten, der beim Durchgang durch das Zufuhrrohr (14) den Durchtritt von Luft von außen zur Einlassöffnung (2) durch das Zufuhrrohr (14) verhindert.

11. Anlage (100) nach einem der vorhergehenden Ansprüche, wobei einer oder mehrere Sensoren mit der Kammer (1) und/oder dem Rohr (3) und/oder dem Kondensator (12) verbunden sind.

12. Verfahren zum Kühlen von Beton, der eine vorbestimmte Wassermenge enthält, mittels einer Anlage (100) zum Kühlen von Beton, der eine vorbestimmte Wassermenge enthält, wobei die Anlage (100) aufweist:
• ein luftdichtes Gehäuse (20), in dem eine Kammer (1), die dazu bestimmt ist, eine gewünschte Menge Beton aufzunehmen, eine Einlassöffnung (2) für den Beton in die Kammer (1) und ein Rohr (3) ausgebildet sind, das mit der Kammer (1) in Verbindung steht und sich von der Kammer (1) zu einer Auslassöffnung (5) für den Beton erstreckt, die im Gehäuse (20) an einem Ende des Rohrs (3) auf der der Kammer (1) gegenüberliegenden Seite ausgebildet ist, wobei das Rohr (3) eingerichtet ist, um den Beton aus der Kammer (1) zur Auslassöffnung (5) zu fördern,
• eine Vakuumpumpe (10), die mit der Kammer (1) verbunden ist, um einen Unterdruckgrad darin einzustellen, um zumindest eine teilweise Verdampfung des Wassers aus dem Beton zu bewirken,
• einen Kondensator (12), der innerhalb der Kammer (1) angeordnet ist, um das verdampfte Wasser zu kondensieren, wobei der Kondensator (12) derart eingerichtet ist, dass das kondensierte Wasser in den Beton innerhalb der Kammer (1) und/oder des Rohrs (3) fließt, wobei das Verfahren aufweist:
• Vorsehen des Betons mit einer Anfangstemperatur (Ti) in der Kammer (1) durch die Einlassöffnung (2),
• Fördern des Betons aus der Kammer (1) zum Rohr (3),
• Einstellen des Drucks (Po) in der Kammer (1) auf einen derartigen Unterdruckgrad, um zumindest eine teilweise Verdunstung des Wassers aus dem Beton mit einer daraus resultierenden Abkühlung des Betons auf eine Endtemperatur (Tf) unterhalb der Anfangstemperatur (Ti) herbeizuführen,
• Kondensieren des aus dem Beton in der Kammer (1) verdampften Wassers,
• Bewirken, dass das kondensierte Wasser in den Beton fließt,
• Entnehmen des Betons bei der Endtemperatur (Tf) durch die Auslassöffnung (5) aus dem Rohr (3).

13. Verfahren nach Anspruch 12, das ein luftdichtes Abdichten der Kammer (1) von der Auslassöffnung (5) mittels des Betons aufweist, der beim Durchgang durch das Rohr (3) den Durchtritt von Luft von der Auslassöffnung (5) zur Kammer (1) durch das Rohr (3) verhindert.

14. Verfahren nach Anspruch 12 oder 13, wobei die Anlage (100) ein Betonzufuhrrohr (14) aufweist, das mit der Einlassöffnung (2) verbunden ist, wobei das Verfahren ein Fördern des Betons von außen zur Einlassöffnung (2) durch das Zufuhrrohr (14) aufweist.

15. Verfahren nach Anspruch 14, das ein luftdichtes Abdichten der Einlassöffnung (2) gegen äußeren Druck mittels des Betons aufweist, der beim Durchgang durch das Zufuhrrohr (14) den Durchtritt von Luft von außen zur Einlassöffnung (2) durch das Zufuhrrohr (14) verhindert.

16. Verfahren nach Anspruch 14 oder 15, wobei der Beton beim Durchgang durch das Rohr (3) und/oder das Zufuhrrohr (14) eine jeweilige Säule mit einer derartigen Höhe bildet, um einen Druck von mindestens einer Atmosphäre aufzubringen.

## Revendications

1. Installation (100) pour refroidir du béton contenant une quantité prédéterminée d'eau, comprenant
• une enveloppe étanche à l'air (20), dans laquelle est définie une chambre (1) destinée à contenir une quantité souhaitée de béton, une ouverture d'entrée (2) pour le béton dans la chambre (1) et un tuyau (3) qui communique avec la chambre (1) et qui s'étend de la chambre (1) à une ouverture de sortie (5) pour le béton qui est définie dans l'enveloppe (20) à une extrémité du tuyau (3) du côté opposé à la chambre (1), le tuyau (3) étant configuré pour transporter le béton de la chambre (1) vers l'ouverture de sortie (5),
• une pompe à vide (10) reliée à la chambre (1) afin de régler le degré de réduction de la pression à l'intérieur de celle-ci de manière à provoquer une évaporation au moins partielle de l'eau contenue dans le béton,
• un condenseur (12) configuré pour condenser l'eau évaporée, **caractérisé en ce que** le condenseur (12) est disposé à l'intérieur de la chambre (1), le condenseur (12) étant configuré de manière à ce que l'eau condensée s'écoule dans le béton à l'intérieur de la chambre (1) et/ou du tuyau (3),
• l'installation (100) comprend un ou plusieurs capteurs choisis parmi les capteurs de pression (17), les capteurs de température (18), les capteurs de niveau (19) et les capteurs de débit (21).

2. Installation (100) selon la revendication 1, dans laquelle le tuyau (3) est configuré pour fermer la chambre (1) de manière étanche à l'air à partir de l'ouverture de sortie (5) au moyen du béton qui, en passant par le tuyau (3), empêche le passage de l'air de l'ouverture de sortie (5) vers la chambre (1) à travers le tuyau (3).

3. Installation (100) selon la revendication 1 ou 2, dans laquelle le tuyau (3), dans une configuration opérationnelle, s'étend vers le bas à partir de la chambre (1), et/ou dans laquelle le tuyau (3), dans une configuration opérationnelle, s'étend sensiblement verticalement.

4. Installation (100) selon l'une quelconque des revendications précédentes, dans laquelle le tuyau (3), dans une configuration opérationnelle, comble une différence de niveau verticale d'au moins 3 mètres, de préférence comble une différence de niveau verticale comprise entre 3 et 6 mètres, de préférence encore comble une différence de niveau verticale comprise entre 4 et 5 mètres.

5. Installation (100) selon l'une quelconque des revendications précédentes, dans laquelle le tuyau (3) comprend un dispositif de réglage (9) pour régler le flux de béton à travers l'ouverture de sortie (5).

6. Installation (100) selon l'une quelconque des revendications précédentes, dans laquelle la chambre (1) est effilée vers le tuyau (3).

7. Installation (100) selon l'une quelconque des revendications précédentes, dans laquelle le condenseur (12) est disposé à l'intérieur de la chambre (1) du côté opposé au tuyau (3).

8. Installation (100) selon l'une quelconque des revendications précédentes, comprenant un tuyau d'alimentation en béton (14) relié à l'ouverture d'entrée (2).

9. Installation (100) selon la revendication 8, dans laquelle le tuyau d'alimentation (14), dans une configuration opérationnelle, s'étend vers le bas à partir de l'ouverture d'entrée (2), et/ou dans laquelle le tuyau (3) et le tuyau d'alimentation (14), dans une configuration opérationnelle, remplissent une différence verticale de niveau qui est sensiblement identique.

10. Installation (100) selon la revendication 8 ou 9, dans laquelle le tuyau d'alimentation (14) est configuré pour acheminer le béton de l'extérieur vers l'ouverture d'entrée (2) et en même temps pour fermer de manière étanche à l'air la chambre (1) contre la pression extérieure au moyen du béton qui, en passant par le tuyau d'alimentation (14), empêche le passage de l'air de l'extérieur vers l'ouverture d'entrée (2) à travers le tuyau d'alimentation (14).

11. Installation (100) selon l'une quelconque des revendications précédentes, dans laquelle le ou les capteurs sont reliés à la chambre (1) et/ou au tuyau (3) et/ou au condenseur (12).

12. Procédé de refroidissement d'un béton contenant une quantité d'eau prédéterminée au moyen d'une installation (100) de refroidissement d'un béton contenant une quantité d'eau prédéterminée, l'installation (100) comprenant
• une enveloppe étanche à l'air (20), dans laquelle est définie une chambre (1) destinée à contenir une quantité souhaitée de béton, une ouverture d'entrée (2) pour le béton dans la chambre (1) et un tuyau (3) qui communique avec la chambre (1) et qui s'étend de la chambre (1) à une ouverture de sortie (5) pour le béton qui est définie dans l'enveloppe (20) à une extrémité du tuyau (3) du côté opposé à la chambre (1), le tuyau (3) étant configuré pour transporter le béton de la chambre (1) vers l'ouverture de sortie (5),
• une pompe à vide (10) reliée à la chambre (1) afin de régler le degré de réduction de la pression à l'intérieur de celle-ci de manière à provoquer une évaporation au moins partielle de l'eau contenue dans le béton,
• un condenseur (12) disposé à l'intérieur de la chambre (1) afin de condenser l'eau évaporée, le condenseur (12) étant configuré de manière à ce que l'eau condensée s'écoule dans le béton à l'intérieur de la chambre (1) et/ou du tuyau (3),
le procédé consistant à :
• introduire dans la chambre (1) par l'ouverture d'entrée (2) le béton à une température initiale (Ti),
• acheminer le béton de la chambre (1) vers le tuyau (3)
• régler la pression (Po) dans la chambre (1) de manière à atteindre un degré de réduction de pression tel qu'il provoque au moins une évaporation partielle de l'eau du béton, avec pour résultat un refroidissement du béton à une température finale (Tf) inférieure à la température initiale (Ti),
• condenser l'eau évaporée du béton dans la chambre (1),
• provoquer l'écoulement de l'eau condensée dans le béton,
• retirer le béton à la température finale (Tf) par l'ouverture de sortie (5) du tuyau (3).

13. Procédé selon la revendication 12, comprenant le scellement hermétique de la chambre (1) à partir de l'ouverture de sortie (5) au moyen du béton qui, en passant par le tuyau (3), empêche le passage de l'air de l'ouverture de sortie (5) vers la chambre (1) à travers le tuyau (3).

14. Procédé selon la revendication 12 ou 13, dans lequel l'installation (100) comprend un tuyau d'alimentation en béton (14) qui est relié à l'ouverture d'entrée (2), le procédé consistant à acheminer le béton de l'extérieur vers l'ouverture d'entrée (2) à travers le tuyau d'alimentation (14).

15. Procédé selon la revendication 14, comprenant le scellement hermétique de l'ouverture d'entrée (2) contre la pression extérieure au moyen du béton qui, en passant par le tuyau d'alimentation (14), empêche le passage de l'air de l'extérieur vers l'ouverture d'entrée (2) à travers le tuyau d'alimentation (14).

16. Procédé selon la revendication 14 ou 15, dans lequel le béton en passant par le tuyau (3) et/ou le tuyau d'alimentation (14) forme une colonne respective d'une hauteur telle qu'elle applique une pression d'au moins une atmosphère.
